# EUROPÄISCHE PATENTSCHRIFT

(11) **EP 0 965 436 B1**
(45) Veröffentlichungstag und Bekanntmachung des Hinweises auf die Patenterteilung: **03.07.2002**
(21) Anmeldenummer: 99110472.0
(22) Anmeldetag: 31.05.1999
(51) Int. Cl.: B29C 51/30, B29C 51/12, B29C 33/40, B29C 33/30

(54) **Tiefziehwerkzeug für Kunststoffplatten oder -Folien und Verfahren zu deren Herstellung**
Deep-drawing tool for plastic plates or plastic foils and fabrication process
Outil d'emboutissage pour des plaques en plastique ou des feuilles en plastique et procédé de fabrication

(30) Priorität: 17.06.1998 DE 29810862 U; 10.11.1998 DE 19851731
(43) Veröffentlichungstag der Anmeldung: 22.12.1999
(73) Patentinhaber: Kundisch GmbH & Co. KG, D-78056 Villingen-Schwenningen (DE)
(72) Erfinder: Kneubühler, Kurt, 8355 Aadorf (CH)
(74) Vertreter: Neymeyer, Franz, Dipl.-Ing. (FH)

(56) Entgegenhaltungen:
- EP-A- 0 772 213
- DE-A- 1 963 573
- DE-A- 2 107 721
- DE-A- 4 324 625
- DE-U- 8 405 035
- US-A- 5 192 560

## Beschreibung

Die Erfindung betrifft ein Tiefziehwerkzeug für das pneumatische Tiefziehen von dünnen Platten oder Folien aus thermoplastischem oder kalt-reckbarem Kunststoff, mit einer in eine platten- oder rahmenartige Matrizenaufnahme positioniert einlegbaren Matrize, welche eine oder mehrere Tiefziehkavitäten enthält, sowie mit einer Abdeckung, welche eine die Tiefziehkavitäten überspannende Druckluftkammer und eine rahmenartige Spannfläche zum Einspannen des Folienrandes aufweist.

Außerdem betrifft die Erfindung ein Verfahren zum pneumatischen Tiefziehen der genannten Folien mit Hilfe eines solchen Tiefziehwerkzeuges.

Für die Durchführung der bekannten Vakuum- und Preßluftverfahren zur Herstellung von tiefgezogenen dünnwandigen Kunststoff-Formteilen (DE 38 40 542 C1, DE 37 27 926 C2) werden Tiefziehwerkzeuge verwendet, deren Matrizen aus einteiligen Metalleinsätzen bestehen, in welchen die die Negativformen bildenden Kavitäten entweder gegossen oder spanabhebend eingearbeitet sind. Die Herstellung solcher Matrizen ist sehr zeitraubend und teuer.

Der Erfindung liegt die Aufgabe zugrunde, ein Tiefziehwerkzeug der eingangs genannten Art zu schaffen, dessen Matrize einfach, schnell und kostengünstig herstellbar. ist.

Gelöst wird diese Aufgabe erfindungsgemäß dadurch, daß die Matrize aus einer oder mehreren übereinander liegenden Platten aus formstabilem Material, insbesondere Kunststoff besteht, in welchen die Kavitäten in Form von ausgeschnittenen Durchbrüchen angeordnet sind.

Da solche Platten aus formstabilem Material, die vorzugsweise gemäß Anspruch 2 aus Acrylglas bestehen können, handelsüblich in beliebigen Dicken preiswert zur Verfügung stehen und darin die erforderlichen Durchbrüche eben so einfach wie schnell und präzise mit bekannter Laserschneidtechnik erzeugt werden können, sind die erfindungsgemäß vorgesehenen Matrizen den herkömmlichen Matrizen nicht nur hinsichtlich ihrer Kosten, sondern auch hinsichtlich ihrer Bearbeitungszeit weit überlegen.

Durch die Verwendung der erfindungsgemäßen Matrizen wird es auch wirtschaftlich, die an sich teueren, pneumatischen Tiefziehmaschinen für Kleinserien einzusetzen.

Weitere vorteilhafte Ausgestaltungen der Erfindung sind Gegenstand der Ansprüche 3 bis 5.

Die mit solchen Tiefziehwerkzeugen bearbeiteten Folien werden u.a. als sog. Deckfolien von Folientastaturen verwendet, wobei die tiefgezogenen Profile als positive Erhöhungen die manuell zu betätigenden Tasten der Folientastatur bilden.

Um solchen tiefgezogenen Tastenprofilen eine höhere Stabilität bzw. einen Schutz gegen Durchdrücken und Bruch- oder Reißbeschädigungen zu verleihen, ist es bereits bekannt, die Hohlräume der Tiefziehprofile mit Füllkörpern zu versehen, die nach den bisher bekannten Verfahren nachträglich in die Hohlprofile eingesetzt bzw. gegossen werden. Diese Verfahren sind nicht nur umständlich und teuer, sondern auch aus anderen Gründen nicht zufriedenstellend. So hat das Ausgießen der Hohlprofile funktionelle Nachteile, in dem sich die Gußkörper mit der gesamten Innenfläche der Hohlprofile verbinden, so daß die Tastenfunktion, d.h. die Flexibilität dieser Hohlprofile, stark beeinträchtigt wird.

Der Erfindung liegt daher die weitere Aufgabe zugrunde, ein Verfahren anzugeben, mit dem auf einfache und kostengünstige Weise die im Tiefziehverfahren erzeugten Hohlprofile der Folie mit Füllkörpern versehen werden können, welche die Funktionen der tiefgezogenen Profile nicht beeinträchtigen.

Gelöst wird diese Aufgabe erfindungsgemäß gemäß Anspruch 6 dadurch, daß die Folie, bevor sie auf die Matrize des Tiefziehwerkzeugs aufgespannt wird, an den Stellen, wo die Tiefziehprofile beim nachfolgenden Tiefziehvorgang erzeugt werden, mit Füllkörpern versehen wird, deren Konturen und Profildicken jeweils wenigstens annähernd den Konturen und/oder Profiltiefen der Tiefziehkavitäten entsprechend ausgebildet und ausgerichtet sind, in welche sie beim Tiefziehvorgang hinein versenkt werden.

Der Hauptvorteil dieses Verfahrens besteht darin, daß die Folie, wenn sie das Tiefziehwerkzeug verläßt, vollständig gebrauchsfertig ist bzw. allenfalls noch auf die richtige Größe geschnitten werden muß, was in einem einzigen Arbeitsgang erfolgen kann. Das nachträgliche Einbringen der Füllkörper in die tiefgezogenen Profile der Folie entfällt vollständig.

Dabei ist es wichtig, daß gemäß Anspruch 7 die Füllkörper jeweils mittels eines Haft- oder Klebemittels auf der Folie positionsgenau fixiert werden, damit sie sich während des Tiefziehvorganges, der durch Druckluftbeaufschlagung bewerkstelligt wird, nicht von der Folie lösen können.

Durch die Ausgestaltung nach Anspruch 8 wird gewährleistet, daß sich keine Druckluft zwischen die Auflagefläche des Füllkörpers und die Folie schieben kann.

Eine besonders günstige Maßnahme ist Gegenstand des Anspruches 9, weil durch sie Teile als Füllkörper verwendet werden können, die andernfalls Abfall wären.

Für den Fall, daß die Füllkörper eine Querschnittsform aufweisen sollen, die von der Querschnittsform einer Kavität sowohl bezüglich des Konturenverlaufs als auch bezüglich der Dicke bzw. Tiefe der Kavität abweicht, ist es vorteilhaft, die Füllkörper nach Anspruch 10 herzustellen.

Während durch die Maßnahmen des Anspruches 11 gewährleistet ist, daß der Tiefziehvorgang durch den Füllkörper nicht behindert wird, kann es von Vorteil sein, wenn die Konturen der Füllkörper um mehr als die doppelte Dicke der Folie kleiner sind als die Konturen der Kavitäten in der Matrize, weil dadurch die Möglichkeit besteht, daß zwischen der Kontur des Füllkörpers und der ihn umschließenden Ringwand des Tiefziehprofils ein mehr oder weniger großer Spalt verbleibt, durch den nicht nur die Flexibilität des beispielsweise als Schaltertaste einer Folientastatur zu benutzenden Tiefziehprofils erhalten bleibt. Andererseits ist es dadurch auch möglich, mit Hilfe eines variierenden Luftdrucks, durch den der Tiefziehvorgang bewerkstelligt wird, unterschiedliche Formen der Ringwand des Tiefziehprofils zu erzeugen.

Die Ansprüche 12 bis 17 betreffen vorteilhafte Ausgestaltungen der Füllkörper, die insbesondere für Folientastaturen gut geeignet sind.

Anhand einiger Ausführungsbeispiele, die in der Zeichnung mehr oder weniger schematisch dargestellt sind, wird die Erfindung im folgenden näher erläutert. Es zeigt:
- Fig. 1: in schematischer Schnittdarstellung ein Tiefziehwerkzeug mit einer einstufigen Matrize;
- Fig. 2: ebenfalls in schematischer Schnittdarstellung ein Tiefziehwerkzeug mit einer zweistufigen Matrize;
- Fig. 3: die Matrize aus dem Werkzeug der Fig. 1 in Draufsicht;
- Fig. 4: einen Schnitt A-A aus Fig. 3;
- Fig. 5: die untere Platte einer zweistufigen Matrize aus Fig. 2 in Draufsicht;
- Fig. 6: einen Schnitt B-B aus Fig. 5;
- Fig. 7: einen Schnitt C-C aus Fig. 2;
- Fig. 8: eine tiefgezogene Folie in Draufsicht;
- Fig. 9: einen Schnitt D-D aus Fig. 8.
- Fig. 10: in vereinfachter Perspektivdarstellung eine Folientastatur mit erhabenen runden Tasten;
- Fig. 11: eine tiefzuziehende Folie mit zwei aufgesetzten Füllkörpern nach der Schnittlinie E-E aus Fig. 12;
- Fig. 12: die Folie der Fig. 11 in Draufsicht;
- Fig. 13: in schematischer Schnittdarstellung ein Tiefziehwerkzeug mit einer einstufigen Matrize und der eingelegten Folie nach den Fig. 11 und 12 vor dem Tiefziehvorgang;
- Fig. 14: das Werkzeug der Fig. 13 mit der eingelegten, bereits tiefgezogenen Folie;
- Fig. 15: die tiefgezogene Folie aus Fig. 14 nach einem Schnitt F-F aus Fig. 16;
- Fig. 16: die Folie der Fig. 15 in der Draufsicht G;
- Fig. 17: einen vergrößerten Ausschnitt H aus Fig. 15;
- Fig. 18: ein anderes einstufiges Tiefziehprofil der Folie in vergrößerter Schnittdarstellung;
- Fig. 19: eine noch in der Tiefziehmatrize liegende zweistufig tiefgezogene Folie in vergrößerter Schnittdarstellung;
- Fig. 20: die Tiefziehfolie der Fig. 19 in vergrößerter Schnittdarstellung mit einem gegenüber der Fig. 19 veränderten Füllkörper;
- Fig. 21: eine tiefzuziehende Folie in Schnittdarstellung mit zwei fixiert aufgesetzten zweistufigen Füllkörpern nach der Schnittdarstellung I-I aus Fig. 22;
- Fig. 22: die Draufsicht K aus Fig. 21;
- Fig. 23: die Folie der Fig. 21 und 22 nach dem Tiefziehvorgang;
- Fig. 24: in schematischer Schnittdarstellung ein Tiefziehwerkzeug mit einer zweistufigen Matrize und bereits tiefgezogener Folie mit anderen Füllkörpern;
- Fig. 25: im Schnitt die tiefgezogene Folie aus dem Werkzeug der Fig. 24;
- Fig. 26: in Draufsicht eine Tiefziehmatrize mit zwei Durchbrüchen und den ausgeschnittenen Füllkörpern;
- Fig. 27: ein Schnitt L-L aus Fig. 26;
- Fig. 28: in stark vergrößerter Darstellung die Unteransicht eines im Spritzgußverfahren hergestellten Füllkörpers;
- Fig. 29: eine Schnittansicht M-M aus Fig. 28;
- Fig. 30: einen Teilschnitt N-N aus Fig. 29.

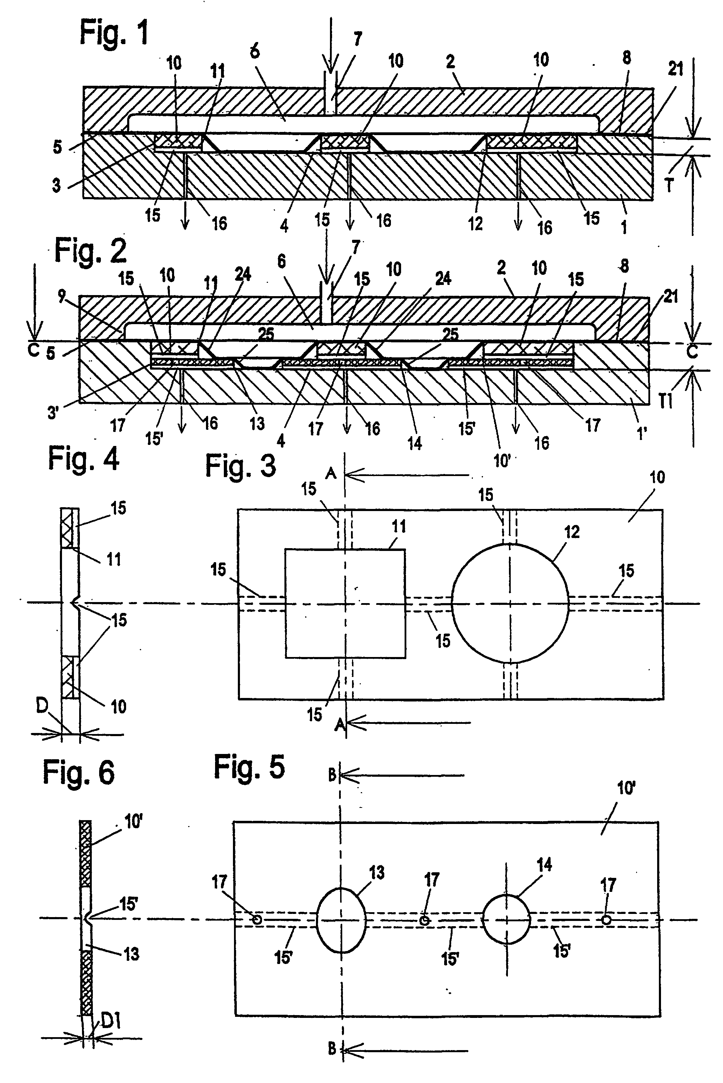

Die in den Fig. 1 und 2 dargestellten Tiefziehwerkzeuge für das pneumatische Tiefziehen von dünnen Platten oder Folien aus thermoplastischem oder kalt-reckbarem Kunststoff bestehen jeweils aus einer plattenartigen Matrizenaufnahme 1 und einer ebenfalls plattenartigen Abdeckung 2.

Die Matrizenaufnahme 1 ist oberseitig mit einer rechtekkigen Ausnehmung 3 versehen, welche eine planebene Bodenfläche 4 aufweist. Die Tiefe T dieser Ausnehmung 3 entspricht der Dicke D einer austauschbar eingelegten, als Matrize dienenden Acrylglasplatte 10, deren Flächenform ebenfalls rechteckig und der Flächenform der Ausnehmung 3 angepaßt ist.

Diese Acrylglasplatte 10 ist somit exakt in der Ausnehmung 3 positionierbar bzw. positioniert. Die Acrylglasplatte 10 weist zwei Tiefziehkavitäten in Form eines rechteckigen Durchbruchs 11 und eines kreisförmigen Durchbruchs 12 auf. Auf ihrer Unterseite ist die Acrylglasplatte 10 mit mehreren Entlüftungsrillen 15 versehen, durch welche die Durchbrüche 11 und 12 mit vertikalen Entlüftungsbohrungen 16 mit der Matrizenaufnahme 1 in Verbindung steht.

Die Durchbrüche 11 und 12 lassen sich in der Acrylglasplatte 10 z.B. auf bekannten Portal-Laseranlagen computergesteuert in jeder beliebigen Form und an jeder beliebigen Stelle der Plattenfläche leicht und schnell erzeugen.

Auch die Entlüftungsrillen 15 auf der Unterseite der Acrylglasplatte 10 sowie die Entlüftungsbohrungen 16 sind mit einer Laseranlage einfach und schnell herstellbar.

Die Abdeckung 2 ist mit einer die Ausnehmung 3 bzw. die Durchbrüche 11, 12 überspannenden Druckluftkammer 6 versehen, die über einen Zuführkanal 7 mit einer nicht dargestellten Druckluftquelle in Verbindung steht. Die Druckluftkammer 6 ist umgeben von einem rahmenartigen Rand 9 mit einer planebenen Spannfläche 8, die zum Einspannen des Folienrandes 21 einer tiefzuziehenden thermoplastischen oder kalt-reckbaren Folie 20 dient, in dem diese unter Zwischenlage des Folienrandes 21 im geschlossenen Zustand des Tiefziehwerkzeuges auf eine planebene Auflagefläche 5 der Matrizenaufnahme 1 gepreßt wird. Die planebene Auflagefläche 5 bildet zugleich die Oberfläche des die Ausnehmung 3 umschließenden Randes der Matrizenaufnahme 1, und sie liegt in einer zur Bodenfläche 4 parallelen Ebene.

Während die Matrizenaufnahme 1 des in Fig. 1 dargestellten Tiefziehwerkzeuges nur eine Acrylplatte 10 enthält und aus diesem Grunde nur zum Erstellen einstufiger Tiefziehformen geeignet ist, weist die Matrizenaufnahme 1' des in Fig. 2 dargestellten Tiefziehwerkzeuges eine Ausnehmung 3' mit einer größeren Tiefe **T1** auf.

Diese Ausnehmung 3' hat die gleiche rechteckige Flächenform wie die Ausnehmung 3 der Fig. 1. Der oberen Acrylglasplatte 10, die auch bei diesem Werkzeug austauschbar und exakt positioniert in die Ausnehmung 3' eingelegt ist, ist eine zweite Acrylglasplatte 10' ebenfalls austauschbar und exakt positioniert unterlegt. Diese zweite Acrylglasplatte 10' weist im vorliegenden Beispiel die gleiche Flächenform auf wie die Acrylplatte 10. Sie ist mit zwei Tiefziehkavitäten in Form eines elliptischen Durchbruches 13 und eines kreisförmigen Durchbruches 14 versehen, die im dargestellten Ausführungsbeispiel jeweils in der Mitte der Durchbrüche 11 und 12 der Acrylglasplatte 10 liegen.

Die Tiefe **T1** entspricht zumindest annähernd der Summe der beiden Dicken **D** und **D1** (Fig. 4 und 6) der beiden aufeinander liegenden Acrylglasplatten 10 und 10'.

Die untere Acrylglasplatte 10' ist auf ihrer Unterseite mit Entlüftungsrillen 15' versehen, welche die Durchbrüche 13 und 14 mit den Entlüftungsbohrungen 16 der Matrizenaufnahme 1' verbinden. Ob bei einer solchen zweistufigen Matrize auch die obere Acrylglasplatte 10 auf ihrer Unterseite mit Entlüftungsrillen oder sonstigen Entlüftungskanälen versehen sein muß, hängt im wesentlichen von der Form und Tiefe ihrer Durchbrüche sowie von der Tiefziehform und dem Luftvolumen ab, das in diesem Bereich zu verdrängen ist.

Bei dem in Fig. 2 bis 6 dargestellten Ausführungsbeospiel verbinden Bohrungen 17 in der Acrylplatte 10' deren Entlüftungsrillen 15' mit den Entlüftungsrillen 15 der oberen Acrylglasplatte 10, damit die in den Tiefziehkavitäten vorhandene Luft während des Tiefziehvorganges entweichen kann. Statt der Bohrungen 17 oder zusätzlich dazu könnte die untere Acrylglasplatte 10' mit Randeinschnitten versehen sein, durch welche die entweichende Luft in die Entlüftungsrillen 15' gelangen kann.

Die Dicke **D1** der Acrylplatte 10' ist im gezeigten Beispiel kleiner als die Dicke **D** der Acrylplatte 10. Daß die Wahl der Dicken **D** und **D1** von der jeweils verlangten Tiefziehform abhängig ist und dieser beliebig angepaßt werden kann, erhöht die Vorteilhaftigkeit des erfindungsgemäßen Tiefziehwerkzeuges.

Auch beim Tiefziehwerkzeug der Fig. 2 ist die Abdeckung 2 mit der Druckluftkammer 6 und dem Zuführkanal 7 in der gleichen Weise vorhanden wie beim Tiefziehwerkzeug der Fig. 1. Auch hier wird der Folienrand 21 zwischen den planebenen Auflage- und Spannflächen 5 bzw. 8 sowie der Matrizenaufnahme 1' und der Abdeckung 2 eingespannt. Nach dem öffnen des Tiefziehwerkzeuges, was jeweils durch Abheben der Abdeckung 2 oder Absenken der Matrizenaufnahme 1 bzw. 1' erfolgt, können die tiefgezogenen Folien 20 dem Werkzeug leicht entnommen werden.

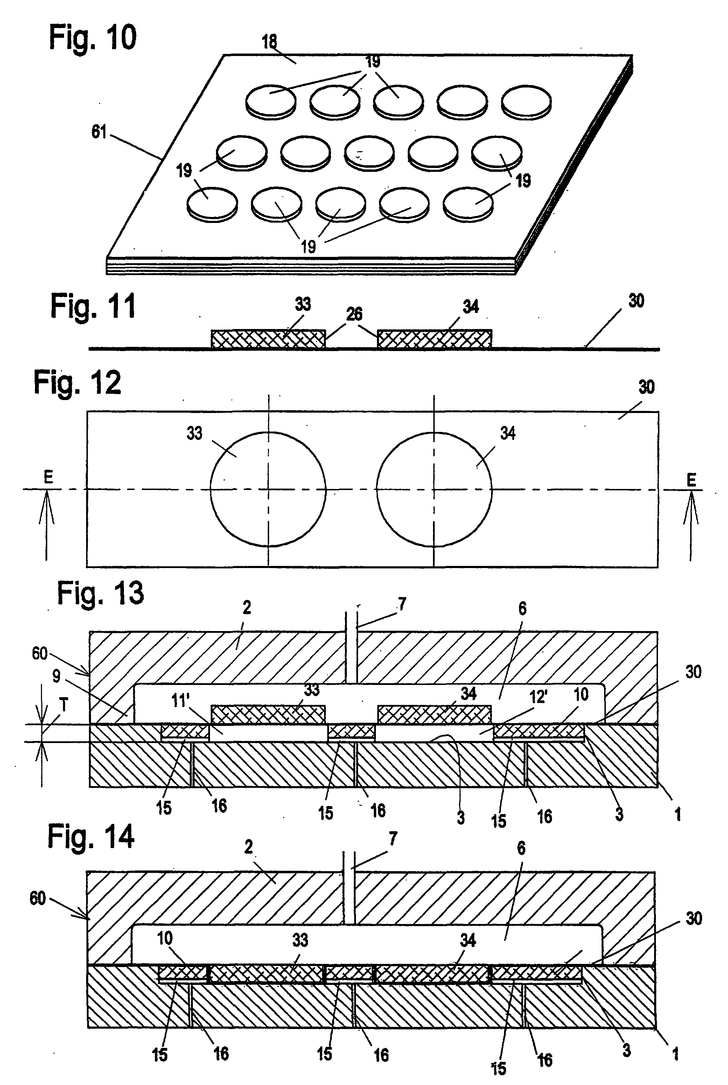

In Fig. 10 ist schematisch eine sandwichartig aufgebaute Folientastatur 61 dargestell. Sie besteht demnach aus mehreren aufeinandergelegten, in der Regel durch Kleben miteinander verbundenen Platten und Schichten, von denen die oberste, die sog. Deckplatte 18 bildet. Diese Deckplatte 18 ist mit mehreren matrizenartig angeordneten erhabenen runden Drucktasten 19 versehen, die jeweils als Tiefziehprofile in der nachfolgend beschriebenen Weise erzeugt werden.

Die in den Fig. 13, 14 und 23 dargestellten Tiefziehwerkzeuge 60 bzw. 60', die für das pneumatische Tiefziehen von dünnen Platten bzw. Folien aus thermoplastischem oder kalt-reckbarem Kunststoff geeignet sind, sind gleich aufgebaut wie die Tiefziehwerkzeuge der Fig. 1 und 2.

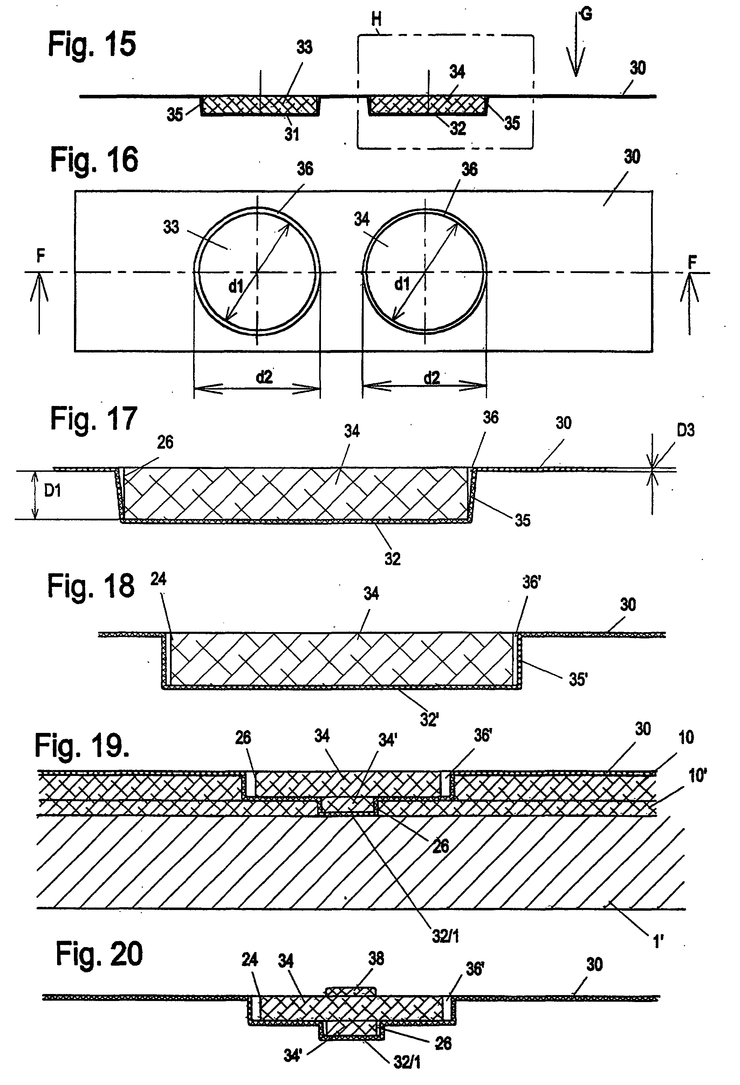

Die Matrizenaufnahme 1 ist oberseitig mit einer rechtekkigen Ausnehmung 3 versehen, welche die planebene Bodenfläche 4 aufweist. Die Tiefe **T** dieser Ausnehmung 12 entspricht der Dicke **D** einer austauschbar eingelegten, als Matrize dienenden Acrylglasplatte 10, deren Flächenform ebenfalls rechteckig und der Flächenform der Ausnehmung 12 angepaßt ist (Fig. 17 und 18).

Diese Acrylglasplatte 10 ist somit exakt in der Ausnehmung 3 positionierbar bzw. positioniert. Die Acrylglasplatte 10 weist zwei Tiefziehkavitäten in Form zweier kreisförmiger zylindrischer Durchbrüche 11' und 12' auf, die beispielsweise mittels eines Laser-Schneidwerkzeuges ausgeschnitten sind. Beim Ausschneiden dieser Durchbrüche 11' und 12' entstehen zwei ebenfalls kreisförmige Plattenkörper 22 und 23 (Fig. 16), die schon aufgrund des beim Schneiden entstehenden Schnittspaltes einen kleineren Durchmesser **d1** haben als die beiden Durchbrüche mit dem Durchmesser **d**.

Die aus der Acrylglasplatte 10 ausgeschnittenen Füllkörper 33 und 34 sowie 34' haben jeweils eine zylindrische Umfangsfläche 26 (Fig. 11 und 13)

Im Gegensatz zu der in Fig. 10 dargestellten Deckplatte 18 der Folientastatur 61 sind die in den Fig. 11 und 12, 15 und 16 sowie 21 und 22 dargestellten Folien 30 aus Gründen der einfacheren Darstellung jeweils schmaler ausgebildet und auch nur für die Bildung zweier Tiefziehprofile mit entsprechenden Füllkörpern vorgesehen.

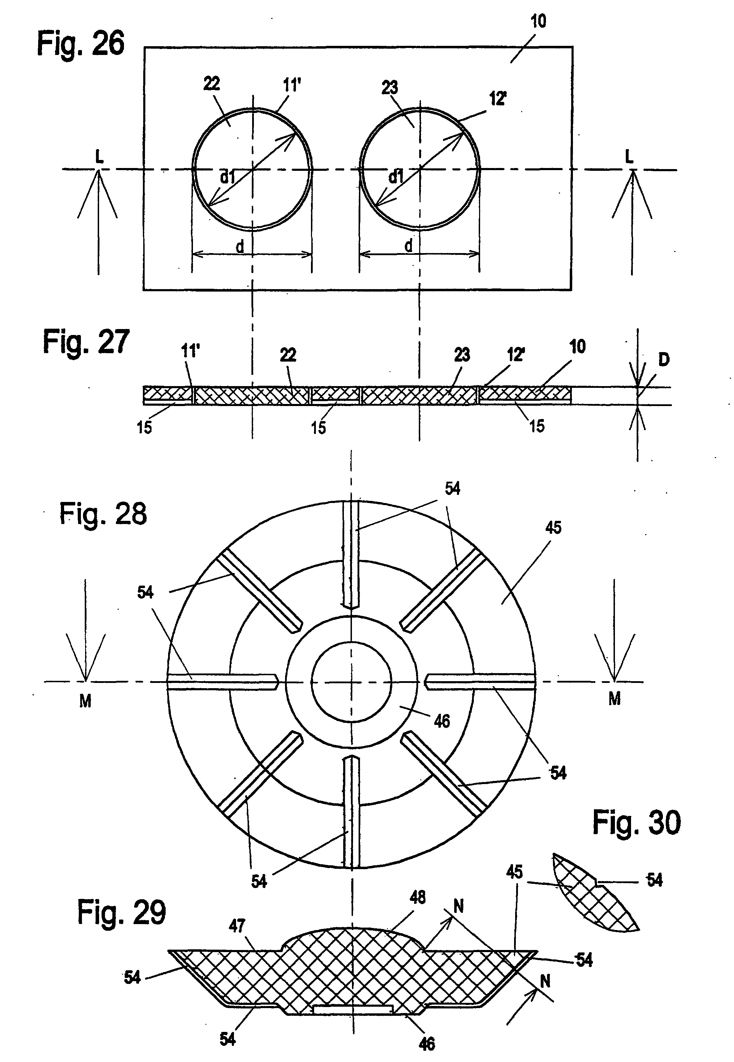

Um beispielsweise die Folie 30 der Fig. 11 und 12 mit zwei kreisrunden Tiefziehprofilen 31 und 32 zu versehen (Fig. 15 und 16), in denen sich jeweils ein Füllkörper 33 bzw. 34 befindet, werden die in entsprechender Größe, d.h. mit dem Durchmesser **d1** aus der Acrylglasplatte 10 (Fig. 26, 27) ausgeschnittenen Plattenkörper 22 und 23 mittels eines Haftmittels oder Klebers so auf der noch planebenen Folie 30 positioniert, daß sie beim späteren Tiefziehvorgang im Tiefziehwerkzeug 60 in die aus den Durchbrüchen 11' und 12' bestehenden Kavitäten der als Matrize in die Ausnehmung 3 der Matrizenaufnahme 1 eingelegten Acrylglasplatte 10 versenkt werden können. Dabei ist wichtig, daß zwischen der Folie 30 und der Auflagefläche der Füllkörper 33, 34 eine luftdichte feste Verbindung entsteht.

Nach dem positionierten Einlegen der Folie 30 mit den darauf befestigten Füllkörpern 33 und 34 wird das Tiefziehwerkzeug 60 durch Aufsetzen der Abdeckung 2 geschlossen. Dann wird in die Druckluftkammer 6 mit einer vorgegebenen Dosierung Druckluft durch den Zuführkanal 7 eingeführt. Durch den in der Druckluftkammer 6 entstehenden Überdruck werden die beiden Plattenkörper 17, 18 als Füllkörper 33 und 34 gemeinsam mit den von ihnen erfaßten Folienabschnitten in die Durchbrüche 11' und 12' der als Matrize fungierenden Acrylglasplatte 10 gesenkt, bis die Folie auf der Bodenfläche 4 der Ausnehmung 3 aufsitzt. Diese Situation ist in Fig. 14 dargestellt.

Nach dem Herausnehmen der Folie 30 aus dem Tiefziehwerkzeug 4 hat diese die in den Fig. 15 und 16 dargestellte Form. Man erkennt die in den Tiefziehprofilen 31 und 32 liegenden Füllkörper 33 und 34. Aus der vergrößerten Darstellung der Fig. 17 ist zu erkennen, daß die umlaufende Ringwand 35 des Tiefziehprofils 32 eine konische Form aufweist. Diese Konizität der Ringwand 35 ist trotz der zylindrischen Form der Dürchbrüche 11' und 12' sowie der Füllkörper 33 und 34 dadurch entstanden, daß der Durchmesser **d1** des Füllkörpers 34 um mehr als die doppelte Dicke **D3** der Folie 30 kleiner ist als der Durchmesser **d** des Durchbruchs 12' und daß zudem die Zufuhr der Druckluft in die Druckluftkammer 6 mit einer entsprechenden Dosierung erfolgt ist.

Zwischen der Ringwand 35 und dem Umfang des Füllkörpers 34 besteht somit ein im Querschnitt keilförmiger Ringspalt 36. Dieser Ringspalt 36 ist in gleicher Weise auch beim Tiefziehprofil 31 vorhanden.

In Fig. 18 ist ein Tiefziehprofil 32' in vergrößerter Darstellung wiedergegeben, dessen Ringwand 35' zumindest annähernd zylindrisch ausgebildet ist. Diese zylindrische Ausbildung sowohl der Ringwand 35' als auch des entstehenden Ringspalts 36' ist mit der gleichen Acrylglasplatte 10 und den gleichen Hüllkörpern 33 und 34, lediglich durch eine höhere Dosierung der zugeführten Druckluft erzielt worden, wobei auch eine höhere Erwärmung bzw. andere Streckeigenschaften der Folie 30 eine Rolle spielen können.

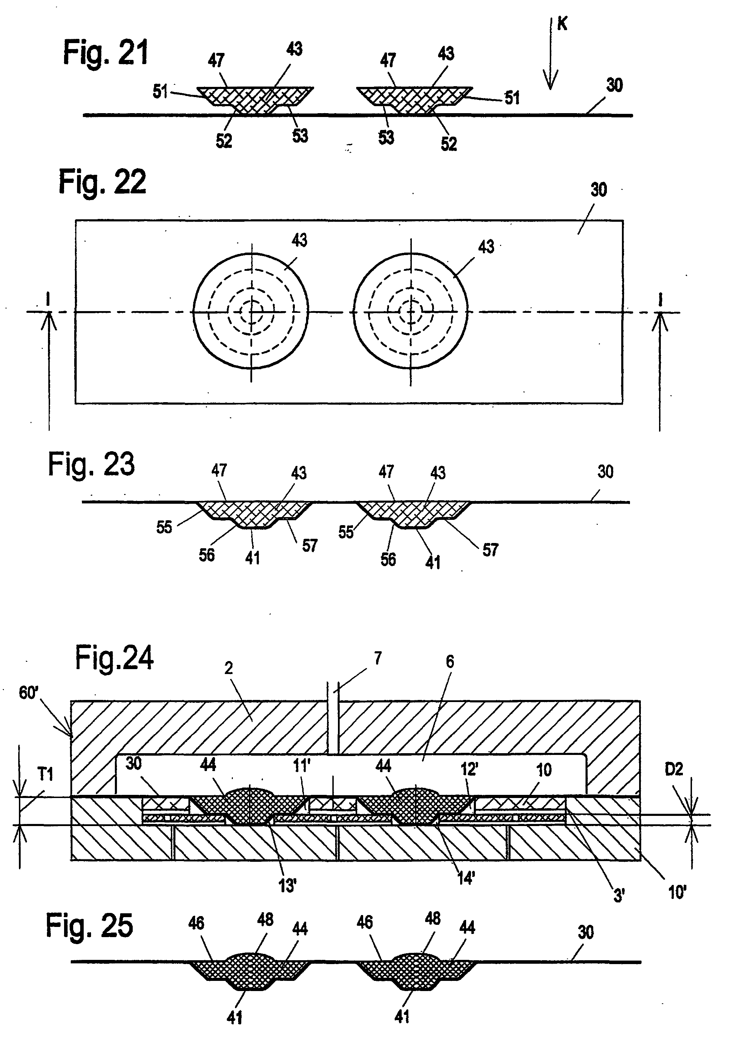

Während die Matrizenaufnahme 1 des in den Fig. 13 und 14 dargestellten Tiefziehwerkzeuges 60 nur eine Acrylglasplatte 10 enthält und aus diesem Grunde nur zum Erstellen einstufiger Tiefziehprofile geeignet ist, weist die Matrizenaufnahme 1' des in Fig. 24 dargestellten Tiefziehwerkzeuges 60' die Ausnehmung 3' mit einer größeren Tiefe **T1** auf. Diese Ausnehmung 3' hat beispielsweise die gleiche rechteckige Flächenform wie die Ausnehmung 3 der Fig. 13 und 14. Der oberen Acrylglasplatte 10, die auch bei diesem Tiefziehwerkzeug 60' austauschbar und exakt positioniert in die Ausnehmung 3' eingelegt ist, ist eine zweite Acrylglasplatte 10' ebenfalls austauschbar und exakt positioniert, unterlegt.

Diese zweite Acrylglasplatte 10' weist im vorliegenden Beispiel die gleiche Flächenform auf wie die Acrylglasplatte 10. Sie ist mit zwei Tiefziehkavitäten jeweils in Form eines kreisrunden zylindrischen Durchbruches 11' bzw. 12' versehen, die im dargestellten Ausführungsbeispiel jeweils konzentrisch zu den Durchbrüchen 11' und 12' der Acrylglasplatte 10 angeordnet sind. Die Dicke **D2** der Acrylglasplatte 10' ist im gezeigten Beispiel kleiner als die Dicke **D1** der Acrylglasplatte 10.

Wie bei der Herstellung der Dürchbrüche 11' und 12' in der Acrylglasplatte 10, entstehen auch beim Ausschneiden der Durchbrüche 13' und 14' der Acrylglasplatte 10' kreisrunde Plattenkörper, die als zusätzliche Füllkörper 34' verwendet werden können, um zweistufige Füllkörper zu bilden, in dem diese auf die Füllkörper 33 bzw. 34 aufgeklebt werden.

In den Fig. 19 und 20 ist vereinfacht eine zweistufig tiefgezogene Folie 30 in der aus den Acrylglasplatten 10 und 10' bestehenden Matrize liegend dargestellt. Das Tiefziehen eines solchen zweistufigen Tiefziehprofils erfolgt auf die gleiche Weise wie das Erzeugen eines einstufigen Tiefziehprofils gemäß den Fig. 15 bis 18. Voraussetzung ist natürlich, daß die beiden Füllkörper 34 und 34' fest miteinander verbunden sind und daß der Gesamtfüllkörper 34/34' vor dem Einlegen der Folie 30 in das Tiefziehwerkzeug 60' positionsgerecht auf der noch planebenen Folie 30 befestigt wird, in dem die auf der Folie 30 aufliegende planebene Fläche des Füllkörpers 34' durch ein Haftmittel oder einen Kleber auf der Folie fixiert wird. Die der Folie 30 zugekehrte Ringfläche des Füllkörpers 34 hat in diesem Zustand einen der Dicke D2 des Füllkörpers 34' entsprechenden Abstand von der Folienoberfläche.

In Fig. 20 ist eine mit dem Tiefziehprofil 32/1 versehene Folie im Schnitt dargestellt, deren Füllkörper 34/34' oberseitig zusätzlich mit einer aufgeklebten Erhöhung 38 versehen ist, welche beispielsweise zum leichteren bzw. besseren Betätigen eines Schaltelementes in einer Folientastatur 61 vorteilhaft sein kann.

In den Fig. 21 bis 25 sowie 28 bis 30 sind jeweils zweistufige Füllkörper 43, 44 bzw. 45 dargestellt, die nicht aus Acrylglasplatten ausgeschnitten, sondern im Spritzgußverfahren aus Kunststoff hergestellt sind.

Diese Füllkörper 43 bis 45 haben jeweils die Form zweistufiger Kegelstümpfe, die, wie aus den Fig. 23 und 25 ersichtlich ist, entsprechend ausgebildete Tiefziehprofile 41 der Folie 30 erzeugen, deren.Hohlräume sie jeweils vollständig ausfüllen.

Während die Füllkörper 43 jeweils eine planebene obere Abschlußfläche 47 aufweisen, die nach dem Tiefziehvorgang in der Planebene der Folie 30 liegt (sh. Fig. 23), sind die Füllkörper 44 und 45 jeweils mit einer zentralen Erhöhung 48 versehen, welche die obere planebene verbleibende Ringfläche 46 überragt. Auch diese Erhöhungen 48 dienen, wie die Erhöhung 38 (Fig. 20), einer besseren bzw. sichereren Betätigung von elektrischen Schaltelementen in Folientastaturen 1 (Fig. 10).

Nach dem Tiefziehvorgang liegen auch die planebenen Ringflächen 46 der Füllkörper 44 bzw. 45 jeweils in der Planebene der Folie 30.

Selbstverständlich ist es auch möglich, Füllkörper vorzusehen, die eine geringere Dicke aufweisen als die einstufige oder zweistufige Matrize, die aus den Acrylglasplatten 10 bzw. 10 und 10' gebildet ist. Bei der Verwendung solcher Füllkörper werden die Abschlußflächen 47 bzw. Ringflächen 46 tiefer liegen als die Planebene der Folie 30.

Zur Erzeugung der in den Fig. 23, 24 und 25 im Schnitt dargestellten zweistufigen Tiefziehprofile 41 kann auch eine Matrize verwendet werden, die aus den beiden Acrylglasplatten 10 und 10' besteht, wie sie in Fig. 24 im Tiefziehwerkzeug 60' dargestellt ist.

Wenn man erreichen will, daß diese Tiefziehprofile mit ihren Ringwänden 55 und 56 und ebenso mit ihren flachen Ringwandabschnitten 57 vollständig an den konischen Mantelflächen 51 und 52 sowie an der dazwischenliegenden flachen Ringfläche 53 lose anliegen, ist es nicht nur erforderlich die Druckluftzufuhr in die Druckluftkammer 6 entsprechend zu dosieren, sondern es müssen auch an diesen Mantelflächen 51 und 52 bzw. an der Ringfläche 53 Entlüftungsrillen 54 vorgesehen werden, die am Beispiel der Fig. 28, 29 und 30 dargestellt sind.

Wie bereits im Zusammenhang mit Fig. 17 erwähnt, haben Tiefziehprofile mit konischen Ringwänden im allgemeinen bessere Tastereigenschaften.

Bei dem in den Fig. 28 bis 30 dargestellten Füllkörper 45 ist die auf der Folie 30 zu fixierende Auflagefläche als Ringfläche 46 ausgebildet, was den Vorteil hat, daß eine luftdichte Verbindung zwischen der Folie 30 und dieser Ringfläche 46 sicherer hergestellt werden kann. Außerdem wird weniger Haft- bzw. Klebemittel benötigt.

Die Erzeugung der in den Fig. 23, 24 und 25 dargestellten Tiefziehprofile 41 erfolgt ebenfalls in der schon beschriebenen Weise, in dem das Tiefziehwerkzeug 5 der Fig. 24, in die Folie 30 mit den auf ihr exakt positionierten und fixierten Füllkörper 43 bzw. 44 oder 45 eingesetzt und bei geschlossenem Tiefziehwerkzeug 60' mit Druckluft beaufschlagt wird.

Die in den beiden Acrylglasplatten 10 und 10' vorhandenen Durchbrüche 11 bis 14 sind mit senkrecht zur Oberfläche verlaufenden Schnittkanten bzw. Schnittflächen versehen. Ebenso einfach ist es aber, Durchbrüche zu erzeugen, deren Schnittflächen über die gesamte Höhe oder einen Teil der Höhe schräg verlaufen.

Es ist auch leicht vorstellbar, daß die die Tiefziehkavitäten bildenden Durchbrüche 11 bis 14 der einzelnen Acrylglasplatten 10, 10' beliebig angeordnet und geformt sein können. Ebenso ist es möglich, durch Verwendung von drei oder mehr übereinander liegenden Platten aus formstabilem Kunststoff, insbesondere aus Acrylglas, statt der in den Fig. 1 und 2 dargestellten einstufigen bzw. zweistufigen Tiefziehformen, drei- oder mehrstufige Tiefziehformen zu erzeugen.

Wie bekannt, werden die tiefzuziehenden Folien oder dünnen Platten aus Kunststoff in der Regel auf eine bestimmte Verformungstemperatur vorgewärmt, bevor sie in dem geschlossenen Tiefziehwerkzeug mit der durch den Zuführkanal 7 einströmenden Druckluft der Druckluftkammer 6 beaufschlagt werden.

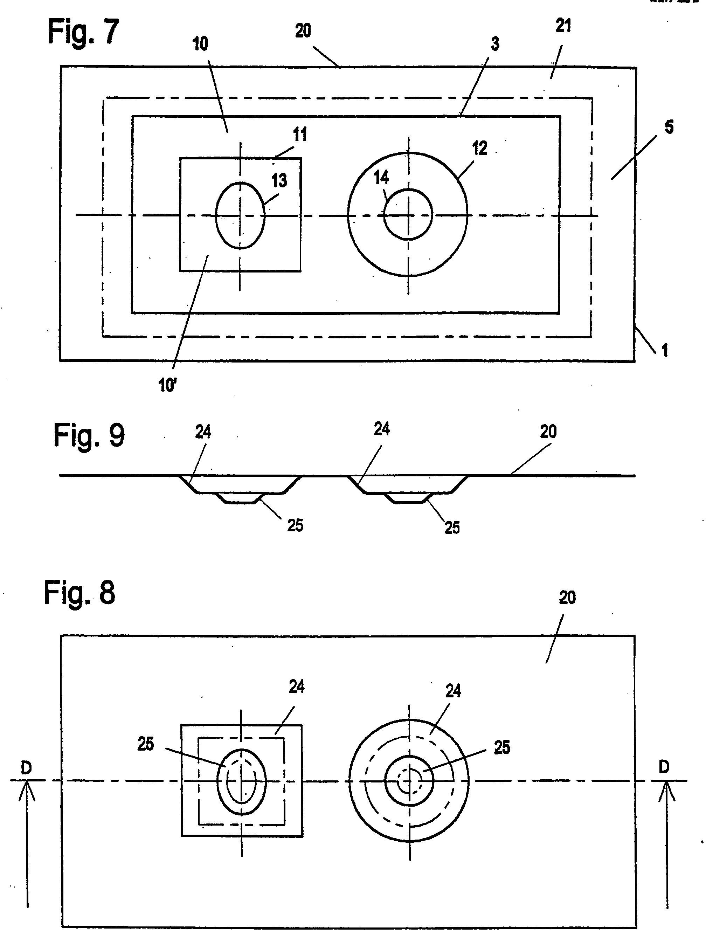

Von dem Grad der Erwärmung und der Größe des Luftdrucks hängt es ab, ob die erzeugten Tiefziehformen sich vollständig der Innenkontur der Durchbrüche 11 und 12 bzw. 13 und 14 anpassen oder ob sie, wie in den Fig. 1 und 2 sowie 8 und 9 dargestellt, schräg verlaufende Wandabschnitte 24 und 25 bilden. Auch abgerundete Übergänge zwischen den einzelnen Tiefziehstufen sind ohne weiteres möglich.

Es ist der Fig. 2 leicht zu entnehmen, daß die Dicken **D** und **D1** der Acrylglasplatten 10 und 10' jeweils die Höhe einer Tiefziehstufe bestimmen.

Da mit der modernen Laser-Schneidtechnik nicht nur in Kunststoffplatten sondern auch in Plattenmaterial aus anderen Werkstoffen, wie z.B. Aluminium, Stahlblech, Holz u.a., rationell die für die jeweils benötigten Tiefziehformen erforderlichen Durchbrüche geschnitten werden können, ist es auch ohne weiteres möglich, Platten aus solchen Materialien als Matrizen zu verwenden.

Da sich jedoch Kunststoff, insbesondere Acrylglas, sehr gut und schnell schneidend bearbeiten läßt, sind Platten aus einem solchen Material zu bevorzugen.

## Patentansprüche

1. Tiefziehwerkzeug für das pneumatische Tiefziehen von dünnen Platten oder Folien (30) aus thermoplastischem oder kalt-reckbarem Kunststoff, mit einer in eine platten- oder rahmenartige Matrizenaufnahme (1, 1') positioniert einlegbaren Matrize (10,10'), welche eine oder mehrere Tiefziehkavitäten enthält, sowie mit einer Abdeckung (2), welche eine die Tiefziehkavitäten (11, 12) überspannende Druckluftkammer (6) und eine rahmenartige Spannfläche (8) zum Einspannen des Folienrandes aufweist,
**dadurch gekennzeichnet,**
**daß** die Matrize aus einer oder mehreren übereinander liegenden Platten (10, 10') aus formstabilem Material, insbesondere aus Kunststoff besteht, in welchen die Kavitäten in Form von ausgeschnittenen Durchbrüchen (11, 12, 13, 14) angeordnet sind.

2. Tiefziehwerkzeug nach Anspruch 1, **dadurch gekennzeichnet, daß** die Matrize aus einer oder mehreren Acrylglasplatten (10, 10') besteht.

3. Tiefziehwerkzeug nach Anspruch 1 oder 2, **dadurch gekennzeichnet, daß** wenigstens eine der Kunststoffbzw. Acrylglasplatten (10, 10') auf ihrer von der Abdeckung (2) bzw. von der Druckluftkammer (6) abgewandten Seite mit Entlüftungsrillen (15, 15') versehen sind, die mit Entlüftungskanälen (16) der Matrizenaufnahme (1, 1') in Verbindung stehen.

4. Tiefziehwerkzeug nach Anspruch 3, **dadurch gekennzeichnet, daß** die einer oberen Kunststoff- oder Acrylglasplatte (10) unterlegte untere Kunststoff- oder Acrylglasplatte (10') Ausnehmungen und/ oder Verbindungsbohrungen (17) aufweist, welche die Entlüftungsrillen (15) der oberen Kunststoff- oder Acrylglasplatte (10) mit den Entlüftungskanälen (16') der Matrizenaufnahme (1') verbinden.

5. Tiefziehwerkzeug nach einem der Ansprüche 1 bis 4, **dadurch gekennzeichnet, daß** die Dicke (D, D1) einer Kunststoff- oder Acrylglasplatte (10, 10') jeweils einer Tiefziehstufe entspricht.

6. Verfahren zum pneumatische Tiefziehen von Folien (30), aus thermoplastischem oder kalt-reckbarem Kunststoff, mit Hilfe eines Tiefziehwerkzeugs nach einem der Ansprüche 1 bis 5,
**dadurch gekennzeichnet,**
**daß** die Folie (30), bevor sie auf die Matrize (10, 10') des Tiefziehwerkzeugs (60, 60') aufgespannt wird, an den Stellen, wo die Tiefziehprofile (31, 32, 32/1, 41) beim nachfolgenden Tiefziehvorgang erzeugt werden, mit Füllkörpern (33, 34, 34', 43, 44, 45) versehen wird, deren Konturen und Profildicken jeweils wenigstens annähernd den Konturen und/oder Profiltiefen der Tiefziehkavitäten (11', 12') entsprechend ausgebildet und ausgerichtet sind, in welche sie beim Tiefziehvorgang hinein versenkt werden.

7. Verfahren nach Anspruch 6, **dadurch gekennzeichnet, daß** die Füllkörper (33, 34, 34', 43, 44, 45) jeweils mittels eines Haft- oder Klebemittels auf der Folie (30) dem Kavitätenraster einer Matrize entsprechend positionsgenau fixiert werden.

8. Verfahren nach Anspruch 7, **dadurch gekennzeichnet, daß** die Füllkörper (33, 34, 34', 43, 44, 45) jeweils mit ihrer gesamten Auflagefläche auf der Folie (30) luftdicht aufliegend fixiert werden.

9. Verfahren nach einem der Ansprüche 6 bis 8, **dadurch gekennzeichnet, daß** als Füllkörper (33, 34, 34') die zur Erzeugung der aus ausgeschnittenen Durchbrüchen (11', 12') bestehenden Tiefziehkavitäten in den aus formstabilen Kunststoffplatten (10, 10') bestehenden Matrizen ausgeschnittenen Plattenteile verwendet werden.

10. Verfahren nach einem der Ansprüche 6 bis 8, **dadurch gekennzeichnet, daß** die aus Kunststoff bestehenden Füllkörper (43, 44, 45) im Spritzgußverfahren hergestellt sind.

11. Verfahren nach einem der Ansprüche 6 bis 10, **dadurch gekennzeichnet, daß** die Konturen der Füllkörper (33, 34) ringsum um wenigstens die doppelte Dicke (d) der Folie (30) kleiner sind als die Konturen der Kavitäten (11', 12') in der Matrize.

12. Füllkörper für eine gemäß einem der Ansprüche 6 bis 8 oder 10 hergestellte Folie zu deren Verwendung als Deckfolie (18) einer Folientastatur (61), **dadurch gekennzeichnet, daß** die von der Folie (30) nicht bedeckte, rückseitige, freie Oberfläche des Füllkörpers (34, 44, 45) mit einer Erhöhung (36, 48) versehen ist.

13. Füllkörper für eine nach dem Verfahren gemäß Anspruch 6 bis 8, 10 oder 11 hergestellte Folie, **dadurch gekennzeichnet, daß** der Füllkörper (33, 34, 43, 44, 45) ein- oder mehrstufig ausgebildet ist.

14. Füllkörper nach Anspruch 12 oder 13, **dadurch gekennzeichnet, daß** seine Umfangsfläche(n) (51, 52) eine konische Form aufweisen.

15. Füllkörper nach Anspruch 14, **dadurch gekennzeichnet, daß** seine Umfangsfläche(n) (51, 52) mit Entlüftungsrillen (54) versehen sind.

16. Füllkörper nach einem der Ansprüche 11 bis 15, **dadurch gekennzeichnet, daß** die auf der Folie (30) fixierte Auflagefläche aus einer planebenen Ringfläche (46) besteht.

17. Füllkörper nach Anspruch 12 oder 13, **dadurch gekennzeichnet, daß** er aus einer Acrylglasplatte (10, 10') mittels eines Laserschneidgerätes ausgeschnitten ist und eine zylindrische Umfangsfläche aufweist.

## Claims

1. Thermoforming mould for pneumatic thermoforming of thin sheets or films (30) made of thermoplastic or 'cold drawable plastics material, with an insertable female mould (10, 10') positioned in a sheet- or frame-like female mould mount (1, 1'), containing one or more thermoforming cavities, and with a covering (2) comprising a compressed air chamber (6) bridging the thermoforming cavities (11, 12) and a frame-like fixing face (8) for fixing the edge of the film, **characterised in that** the female mould consists of one or more sheets (10, 10') made of dimensionally stable material, in particular of plastics material, located one on top of the other and in which the cavities are arranged in the form of cut out through-apertures (11, 12, 13, 14).

2. Thermoforming mould according to claim 1, **characterised in that** the female mould consists of one or more acrylic sheets (10, 10').

3. Thermoforming mould according to claim 1 or 2, **characterised in that** at least one of the plastic or acrylic sheets (10, 10') is provided on its side remote from the covering (2) or from the compressed air chamber (6) with venting grooves (15, 15') connected to venting ducts (16) of the female mould mount (1, 1').

4. Thermoforming mould according to claim 3, **characterised in that** the lower plastic or acrylic sheet (10') placed underneath an upper plastic or acrylic sheet (10) has recesses and/or connecting bores (17) connecting the venting grooves (15) of the upper plastic or acrylic sheet (10) to the venting ducts (16') of the female mould mount (1').

5. Thermoforming mould according to any of claims 1 to 4, **characterised in that** the thickness (D, D1) of a plastic or acrylic sheet (10, 10') corresponds to a respective thermoforming stage.

6. Method for pneumatically thermoforming films (30) made of thermoplastic or cold drawable plastic material, with the aid of a thermoforming mould according to any of claims 1 to 5, **characterised in that** the film (30) is provided with fillers (33, 34, 34', 43, 44, 45) before it is fixed to the female mould (10, 10') of the thermoforming mould (60, 60') at the points where the thermoforming profiles (31, 32, 32/1, 41) are produced during the subsequent thermoforming process, the respective contours and profile thicknesses of which fillers are designed and aligned to correspond at least approximately with the contours and/or profile depths of the thermoforming cavities (11', 12'), into which they are recessed during the thermoforming process.

7. Method according to claim 6, **characterised in that** the fillers (33, 34, 34', 43, 44, 45) are each fixed in their correct position on the film (30) in accordance with the cavity grid of a female mould by means of an adhesive.

8. Method according to claim 7, **characterised in that** the fillers (33, 34, 34', 43, 44, 45) are each fixed so as to rest in an air-tight manner on the film (30) with their entire bearing face.

9. Method according to any of claims 6 to 8, **characterised in that** the plate parts cut out to produce the thermoforming cavities consisting of cut-out through-apertures (11', 12') are used in the female moulds consisting of dimensionally stable plastic sheets (10, 10').

10. Method according to any of claims 6 to 8, **characterised in that** the fillers (43, 44, 45) consisting of plastics material are produced in the injecting-moulding process.

11. Method according to any of claims 6 to 10, **characterised in that** the contours of the fillers (33, 34) are smaller by at least twice the thickness (d) of the film (30) than the contours of the cavities (11', 12') in the female mould.

12. Fillers for a film produced according to any of claims 6 to 8 or 10 for its use as a covering film (18) of a film keyboard (61) **characterised in that** the back free surface of the filler (33, 44, 45) not covered by the film (30) is provided with an elevation (36, 48).

13. Filler for a film produced according to the method of claims 6 to 8, 10 or 11, **characterised in that** the filler (33, 34, 43, 44, 45) is designed in a single stage or in multiple stages.

14. Filler according to claim 12 or 13, **characterised in that** its peripheral faces(s) (51, 52) have a conical shape.

15. Filler according to claim 14, **characterised in that** its peripheral face(s) (51, 52) are provided with venting grooves (54).

16. Filler according to any of claims 11 to 15, **characterised in that** the bearing face fixed to the film (30) consists of a plane annular face (46).

17. Filler according to claim 12 or 13, **characterised in that** it is cut out of an acrylic sheet (10, 10') by means of a laser cutter and has a cylindrical peripheral face.

## Revendications

1. Outil d'emboutissage pour l'emboutissage pneumatique de minces plaques ou films (30) en matière plastique thermoplastique ou étirable à froid, comprenant une matrice (10, 10') pouvant être positionnée dans un réceptacle de matrice (1, 1') semblable à une plaque ou un cadre, qui contient une ou plusieurs cavités d'emboutissage, comprenant également un recouvrement (2) présentant une chambre d'air comprimé (6) au-dessus des cavités d'emboutissage (11, 12) et une surface de serrage semblable à un cadre (8) pour immobiliser le bord du film, **caractérisé en ce que** la matrice est composée d'une ou de plusieurs plaques superposées (10, 10') en une matière indéformable, notamment en matière plastique, dans lesquelles les cavités sont disposées sous la forme de passages découpés (11, 12, 13, 14).

2. Outil d'emboutissage selon la revendication 1, **caractérisé en ce que** la matrice est composée d'une ou de plusieurs plaques de verre acrylique (10, 10').

3. Outil d'emboutissage selon la revendication 1 ou 2, **caractérisé en ce qu'**au moins l'une des plaques en matière plastique ou en verre acrylique (10, 10') est munie sur sa face opposée au recouvrement (2) ou à la chambre d'air comprimé (6) de rainures d'aération (15, 15') communiquant avec des canaux d'aération (16) du réceptacle (1, 1') de la matrice.

4. Outil d'emboutissage selon la revendication 3, **caractérisé en ce que** la plaque en matière plastique ou en verre acrylique inférieure (10') placée sous une plaque en matière plastique ou en verre acrylique supérieure (10) présente des évidement et/ou des perçages de liaison (17) qui relient les rainures d'aération (15) de la plaque en matière plastique ou en verre acrylique supérieure (10) aux canaux d'aération (16') du réceptacle (1') de la matrice.

5. Outil d'emboutissage selon l'une des revendications 1 à 4, **caractérisé en ce que** l'épaisseur (D, D1) d'une plaque en matière plastique ou en verre acrylique (10, 10') correspond chaque fois à une étape d'emboutissage.

6. Procédé pour l'emboutissage pneumatique de films (30) en une matière plastique thermoplastique ou étirable à froid au moyen d'un outil d'emboutissage selon l'une des revendications 1 à 5, **caractérisé en ce que** le film (30), avant d'être posé sur la matrice (10, 10') de l'outil d'emboutissage (60, 60'), est muni d'éléments de remplissage (33, 34, 34', 43,44,45) aux endroits où le processus d'emboutissage qui suit crée les profils d'emboutissage (31, 32, 32/1, 41), éléments dont les contours et les épaisseurs des profils sont réalisés et orientés au moins approximativement conformément aux contours et/ou aux épaisseurs de profil des cavités d'emboutissage (11', 12') dans lesquelles ils sont enfoncés lors du processus d'emboutissage.

7. Procédé selon la revendication 6, **caractérisé en ce que** les éléments de remplissage (33, 34, 34', 43, 44, 45) sont fixés au moyen d'un agent adhésif sur le film (30) dans la position adéquate, conformément à la trame des cavités d'une matrice.

8. Procédé selon la revendication 7, **caractérisé en ce que** les éléments de remplissage (33, 34, 34', 43, 44, 45) sont fixés en reposant hermétiquement sur le film (30) avec toute leur surface d'appui.

9. Procédé selon l'une des revendications 6 à 8, **caractérisé en ce que** l'on utilise en tant qu'éléments de remplissage (33, 34, 34') les parties de plaque qui sont découpées dans les matrices composées de plaques en matière plastique indéformables (10, 10') pour former les cavités d'emboutissage constituées par des découpes (11', 12').

10. Procédé selon l'une des revendications 6 à 8, **caractérisé en ce que** les éléments de remplissage (43, 44, 45) en matière plastique sont fabriqués par moulage par injection.

11. Procédé selon l'une des revendications 6 à 10, **caractérisé en ce que** le périmètre des éléments de remplissage (33, 34) est inférieur au périmètre des cavités (11', 12') dans la matrice au moins du double de l'épaisseur (d) du film (30).

12. Élément de remplissage pour un film fabriqué conformément à l'une des revendications 6 à 8 ou 10 et destiné à être utilisé en tant que film de recouvrement (18) d'un clavier (61), **caractérisé en ce que** la surface libre arrière de l'élément de remplissage (34, 44, 45) qui n'est pas recouverte par le film (30) est munie d'une élévation (36, 48).

13. Élément de remplissage pour un film fabriqué par un procédé selon l'une des revendications 6 à 8, 10 ou 11, **caractérisé en ce que** l'élément de remplissage (33, 34, 43, 44, 45) est réalisé en un ou plusieurs niveaux.

14. Élément de remplissage selon la revendication 12 ou 13, **caractérisé en ce que** sa (ses) surface(s) périphérique(s) (51, 52) présente(nt) une forme conique.

15. Élément de remplissage selon la revendication 14, **caractérisé en ce que** sa (ses) surface(s) périphérique(s) (51, 52) est (sont) munie(s) de rainures d'aération (54).

16. Élément de remplissage selon l'une des revendications 11 à 15, **caractérisé en ce que** la surface d'appui fixée au film (30) est constituée par une surface annulaire plane (46).

17. Élément de remplissage selon la revendication 12 ou 13, **caractérisé en ce qu'**il est découpé dans une plaque de verre acrylique (10, 10') au moyen d'un appareil à découper au laser et présente une surface périphérique cylindrique.
